# EUROPÄISCHE PATENTSCHRIFT

(11) **EP 3 925 422 B1**
(45) Veröffentlichungstag und Bekanntmachung des Hinweises auf die Patenterteilung: **19.04.2023**
(21) Anmeldenummer: 21170336.8
(22) Anmeldetag: 26.04.2021
(51) Int. Cl.: A01B 63/108, A01F 29/01, B62D 21/18

(54) **LANDWIRTSCHAFTLICHE MASCHINE**
AGRICULTURAL MACHINE
ENGIN AGRICOLE

(30) Priorität: 17.06.2020 DE 102020115945
(43) Veröffentlichungstag der Anmeldung: 22.12.2021
(73) Patentinhaber: CLAAS Selbstfahrende Erntemaschinen GmbH, 33428 Harsewinkel (DE)
(72) Erfinder: Rathjens, Jochen, 21635 Jork (DE); Mühlenhoff, Kai, 59320 Ennigerloh (DE); Nöring, Jens, 48477 Hörstel-Bevergern (DE)
(74) Vertreter: CLAAS Gruppe

(56) Entgegenhaltungen:
- EP-A1- 1 927 277
- DE-A1-102008 049 130
- DE-B4- 10 011 498

## Beschreibung

Die vorliegende Erfindung betrifft allgemein eine fahrbare landwirtschaftliche Maschine und insbesondere einen Feldhäcksler.

Eine solche Maschine hat typischerweise ein Fahrgestell mit sich in Längsrichtung der Maschine erstreckenden Längsträgern, die durch Querträger miteinander verbunden sind und an denen eine Vorderachse, Hinterräder, ein Motor, ein Häckselwerk etc. montiert sind. Das Fahrgestell darf sich unter den im Betrieb darauf einwirkenden Biegemomenten nicht wesentlich verformen. Das für die nötige Stabilität erforderliche Gewicht des Fahrgestells erhöht den Kraftstoffverbrauch und begünstigt unerwünschte Bodenverdichtung.

Werkzeuge für die Feldarbeit, die vorn oder hinten an die Maschine angekoppelt werden und deren Gewicht ganz oder zu einem großen Teil von der Maschine getragen wird, tragen erheblich zu den Biegemomenten bei, denen das Fahrgestell ausgesetzt ist, da ihr Gewicht mit einem langen Hebelarm einwirkt.

Bei einem bekannten Feldhäcksler umfasst das Fahrgestell zwei Längsträger, an deren vorderen Enden jeweils ein Lager gebildet ist, in dem ein Halter für ein Werkzeug um eine in Querrichtung des Fahrgestells orientierte Achse schwenkbar gehalten ist. Unter den Längsträgern hindurch erstreckt sich eine Achsbaugruppe, an der die Vorderräder des Feldhäckslers drehbar gelagert sind. Eine Oberseite der Achsbaugruppe ist an den Längsträgern anliegend befestigt; an einer Unterseite der Achsbaugruppe ist ein Widerlager für ein Stellglied vorgesehen, das an dem Werkzeughalter angreift und das, um das Werkzeug stationär zu halten, in der Lage sein muss, ein Gegendrehmoment zu dem vom Werkzeug auf den Halter ausgeübten Drehmoment zu liefern. Die daraus am Widerlager resultierenden Kräfte erzeugen eine hohe Biegebelastung sowohl in der Achsbaugruppe als auch in den Längsträgern.

DE 10 2008 049130 A1 offenbart eine solche landwirtschaftliche Maschine gemäß dem Oberbegriff des Anspruchs 1.

Eine Aufgabe der vorliegenden Erfindung ist, einen Fahrgestellaufbau für eine landwirtschaftliche Maschine zu schaffen, die eine günstigere Verteilung der Biegekräfte im Fahrgestell erreicht und es so ermöglicht, eine erforderliche Steifigkeit des Fahrgestells bei relativ geringem Gewicht zu erreichen.

Die Aufgabe wird gelöst, indem bei einer landwirtschaftlichen Maschine mit einem Fahrgestell, das wenigstens eine sich in Querrichtung der Maschine erstreckende Achsbaugruppe und wenigstens einen auf der Achsbaugruppe befestigten und sich in Längsrichtung der Maschine erstreckenden Längsträger umfasst, einem an ein Ende des Längsträgers angelenkten Werkzeughalter und einem Stellglied zum Schwenken des Werkzeughalters, das sich in der Längsrichtung zwischen einem Angriffspunkt am Werkzeughalter und einem am Fahrgestell festen Widerlager erstreckt, das Widerlager mit dem Längsträger nicht nur über die Achsbaugruppe verbunden ist, sondern auch über einen Unterzug, der sich an einer vom Werkzeughalter abgewandten Seite der Achsbaugruppe erstreckt.

Der Unterzug kann insbesondere eine Stange umfassen, die sich mit zunehmender Entfernung von der Achsbaugruppe dem Längsträger annähert.

Ein von dem Stellglied abgewandtes Ende kann unmittelbar an dem Längsträger verankert sein, um über das Stellglied übertragene Kräfte in den Längsträger einzuleiten.

Ein dem Widerlager zugewandter Abschnitt der Stange kann sich in Verlängerung des Stellgliedes erstrecken; um die Stange im Wesentlichen nur auf Kompression zu belasten und die Biegebeanspruchung zu minimieren.

Wenigstens ein Stabilisatorkörper kann sich geradlinig zwischen einem Verankerungspunkt an der Stange und einem Verankerungspunkt an dem Längsträger erstrecken. Um zu verhindern, dass die Stange der Belastung durch das Stellglied in einer Richtung fort vom Längsträger ausweicht, genügt, dass der Stabilisatorkörper zugbelastbar ist; Druck- und Biegebelastbarkeit des Stabilisatorkörpers sind zwar hilfreich, aber nicht zwingend notwendig.

Indem wenigstens zwei Stabilisatorkörper vorgesehen sind, deren Verankerungspunkte an dem Längsträger in Querrichtung beabstandet sind, kann einer Neigung der Stange entgegengewirkt werden, einer in ihrer Längsrichtung wirkenden Druckbelastung in der Querrichtung auszuweichen.

Eine steife Platte, die einen Zwischenraum zwischen der Stange und dem Längsträger ausfüllt und jeweils eine am Längsträger und eine an der Stange befestigte Kante aufweist, kann einen solchen Stabilisatorkörper bilden. Ein zweiter Stabilisatorkörper kann durch eine Strebe gebildet sein, die in einer zur Ebene der Platte nicht parallelen Richtung zwischen Längsträger und Stange erstreckt.

Als von dem Werkzeughalter gehaltenes, insbesondere austauschbar gehaltenes, Werkzeug kommt insbesondere ein Erntevorsatz in Betracht.

Wenn die landwirtschaftliche Maschine ein Feldhäcksler ist, kann der Werkzeughalter durch das Stellglied um eine Drehachse einer Häckseltrommel schwenkbar sein.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung eines Feldhäckslers;
- Fig. 2: eine Ansicht eines Rahmens des Feldhäckslers und einer in dem Rahmen montierten Häckseltrommelbaugruppe;
- Fig. 3: eine Seitenansicht des Rahmens;
- Fig. 4: eine Ansicht des Rahmens und eines Gehäuses der Häckseltrommelbaugruppe schräg von unten.

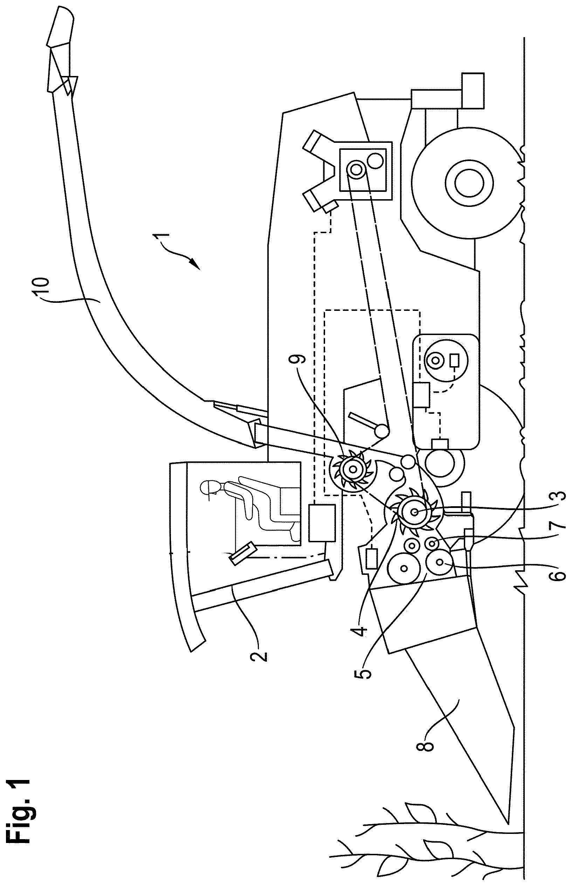

Fig. 1 zeigt in schematischer Darstellung einen Feldhäcksler 1. Die Karosserie des Feldhäckslers 1 ist in ihrem Vorderteil, unterhalb einer Fahrerkabine 2, aufgeschnitten dargestellt, um interne, Erntegut verarbeitende Baugruppen des Feldhäckslers zeigen zu können. Eine dieser Baugruppen ist eine Häckseltrommelbaugruppe mit einer um eine sich in Fahrzeugquerrichtung erstreckende Achse 3 rotierenden Häckseltrommel 4.

Der Häckseltrommelbaugruppe ist eine Fördereinrichtung 5 für Erntegutvorgelagert. Die Fördereinrichtung 5 umfasst mehrere Walzenpaare 6, 7, die jeweils einen Spalt begrenzen und gegensinnig drehangetrieben sind, um das durch den Spalt hindurch laufende Erntegut der Häckseltrommel 4 zuzuführen.

Die Fördereinrichtung 5 trägt wiederum einen in Anpassung an das zu bergende Pflanzenmaterial austauschbaren Erntevorsatz 8.

In der Häckseltrommelbaugruppe zerkleinertes Erntegut wird einem Nachbeschleuniger 9 zugeführt, der dem zerkleinerten Erntegut die nötige Geschwindigkeit verleiht, um einen Auswurfkrümmer 10 zu durchlaufen und in ein (nicht dargestelltes) Begleitfahrzeug übergeladen zu werden.

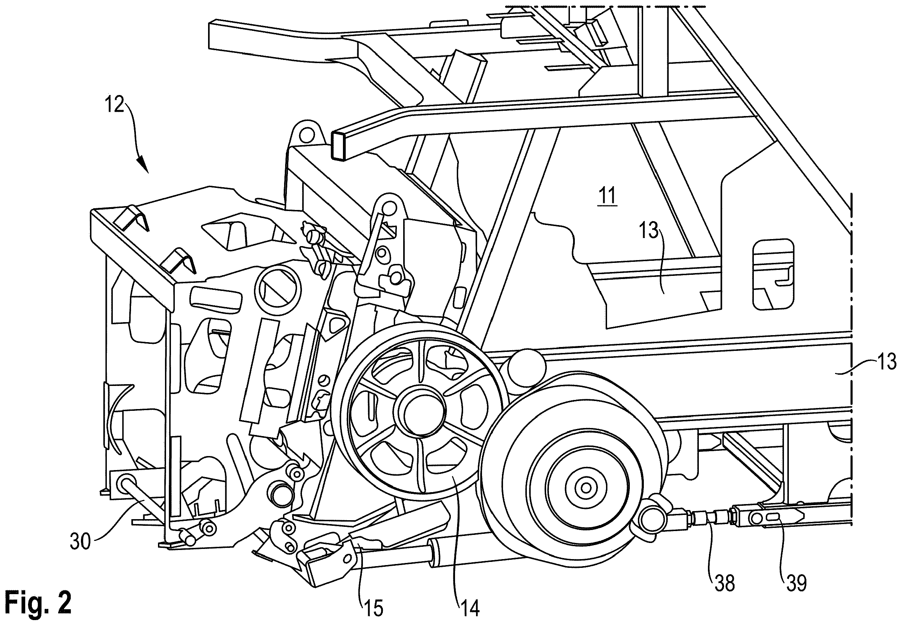

Fig. 2 zeigt einen vorderen Teil eines Rahmens 11 des Feldhäckslers 1 und der darin montierten Häckseltrommelbaugruppe 12 in einer perspektivischen Ansicht schräg von vorn. Der Rahmen 11 umfasst zwei sich im Wesentlichen horizontal in Fahrzeuglängsrichtung erstreckende Längsträger 13, z.B. in Form von T- oder Doppel-T-Profilen, die untereinander durch (in der Fig. nicht sichtbare) Querträger starr verbunden sind und an denen eine Achsbaugruppe 33 einer Vorderachse sowie lenkbare Hinterräder des Feldhäckslers 1 aufgehängt sind.

Das vordere Ende der Längsträger 13 ist in Fig. 2 hinter einer die Drehung der Häckseltrommel antreibenden Riemenscheibe 14 bzw. einem die Häckseltrommel umgebenden Gehäuse 15 verborgen. Das Gehäuse 15 bildet, wie später noch genauer erläutert wird, einen Werkzeughalter zum Halten eines austauschbaren Arbeitswerkzeugs, hier des Erntevorsatzes 8.

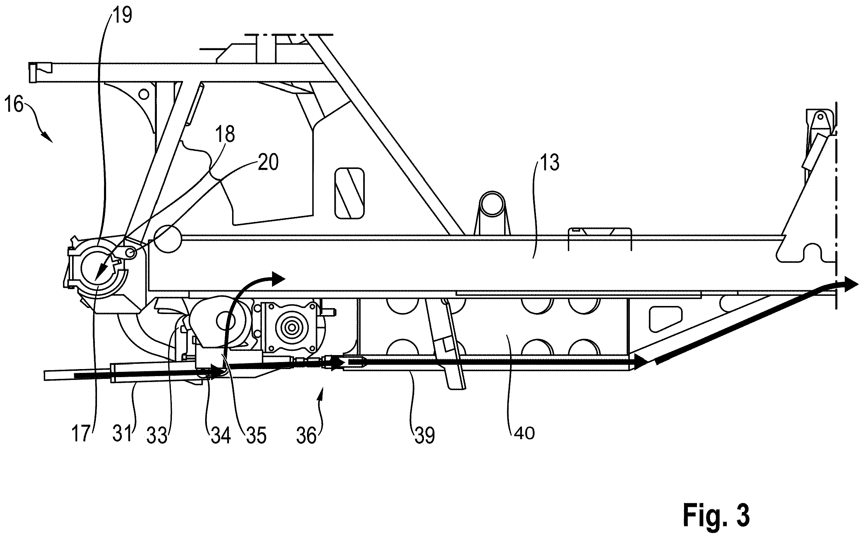

Fig. 3 zeigt eine Seitenansicht des Rahmens 11 ohne die Häckseltrommelbaugruppe 12. Der Längsträger 13 endet in einer Klemmfassung 16, die vorgesehen ist, um eine nicht gezeigte Hülse aufzunehmen, durch die sich die Welle der Häckseltrommelbaugruppe 12 drehbar erstreckt. Die Klemmfassung 16 umfasst ein mit dem Längsträger 13 fest verbundenes Teil 17 in Form eines Ringsektors, dessen Konkavität 18 nach oben gewandt ist, so dass die Häckseltrommelbaugruppe 12 während des Einbaus im oder Ausbaus aus dem Feldhäcksler 1 stabil gelagert werden kann, indem die Hülse in die Konkavität 18 eingelegt wird.

Ein zweites ringsektorförmiges Teil 19 der Klemmfassung 16 ist mit dem Rahmenteil 13 über ein Gelenk 20 verbunden. Die vorderen Spitzen der Teile 17, 19 weisen jeweils eine Bohrung auf, in denen eine Spannschraube 21 montierbar ist. Um die Häckseltrommelbaugruppe 12 in die Konkavität 18 einlegen oder daraus entnehmen zu können, wird die Spannschraube 21 entfernt und das Teil 19 hochgeklappt.

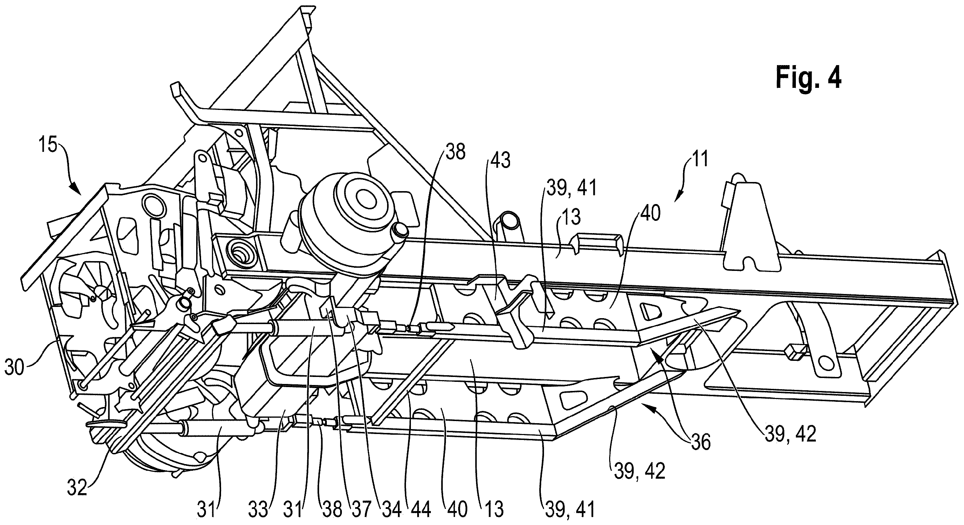

Fig. 4 zeigt eine Ansicht des Rahmens des Feldhäckslers 1 und des Gehäuses 15 der Häckseltrommelbaugruppe 12 schräg von unten. Ein viereckiger Adapter 30 an der Vorderseite des Gehäuses 15 ist vorgesehen, um daran den in dieser Figur nicht dargestellten Erntevorsatz 8 zu montieren oder um daran eine Hebemaschine zum Unterstützen von Ein- und Ausbau der Häckseltrommelbaugruppe 12 aus dem Feldhäcksler 1 anzukoppeln. Unter jedem der Längsträger 13 erstreckt sich ein hydraulisches Stellglied 31 in Fahrzeuglängsrichtung. Kolben der Stellglieder 31 greifen gemeinsam an einem Querbalken 32 an der Unterseite des Gehäuses 15 an. Zylinder der Stellglieder 31 sind jeweils an einem Widerlager 34 schwenkbar angelenkt.

Indem die Stellglieder 31 gemeinsam ausfahren, schwenken sie das Gehäuse 15 um die Achse 3 und heben dadurch ggf. den an dem Adapter 30 montierten Erntevorsatz 8 an.

Die Widerlager 34 der beiden Stellglieder 31 sind hier jeweils durch zwei Schenkel 35 eines Aufnahmeteils gebildet, zwischen denen das hintere Ende des Stellgliedes 31 aufgehängt ist. Das Aufnahmeteil ist einerseits an einem Gehäuse der Achsbaugruppe 33 und andererseits an einem sich unter jedem Längsträger 13 nach hinten erstreckenden und seinerseits an dem Längsträger 13 fest verankerten Unterzug 36 abgestützt.

Um von den von den Stellgliedern 31 übertragenen, im Wesentlichen horizontal nach hinten wirkenden Druck abzufangen, hat das Aufnahmeteil an seinem vorderen Ende eine Fußplatte 37, die mit beiden Schenkeln 35 verbunden ist und sich an einer Vorderseite des Gehäuses der Achsbaugruppe 33 abstützt, und an seinem hinteren Ende einen Verbindungsabschnitt zwischen den beiden Schenkeln 25, der sich am Unterzug 36 abstützt. Der Verbindungsabschnitt ist mit dem Unterzug 36 über ein längenjustierbares Element 38 verbunden, um sicherzustellen, dass das Aufnahmeteil mit dem Gehäuse und dem Unterzug fest verbunden werden kann, ohne dass sich dadurch das Aufnahmeteil, der Unterzug, der Längsträger und das Gehäuse gegenseitig unter Biegespannung setzen. So verteilt sich der Druck des Stellgliedes 31, wenn dieses im Betrieb das Gewicht des Erntevorsatzes 8 trägt, auf das Gehäuse der Achsbaugruppe 33 und den Unterzug 36 entsprechend ihrer jeweiligen Belastbarkeit.

Fig. 3 zeigt anhand von Pfeilen die Übertragung der aus dem Gewicht des Erntevorsatzes 8 resultierenden, von den Stellgliedern 8 ausgeübten Kraft. Indem sich diese am Widerlager 34 auf die Achsbaugruppe 33 und den Unterzug 36 verteilt, werden sowohl die Achsbaugruppe 33 als auch der Längsträger 13 entlastet. Insbesondere die Verringerung der auf das Gehäuse einwirkenden Scherbelastungen erlaubt es, Wandstärke und Gewicht des Gehäuses zu vermindern, ohne dass eine Deformation des Gehäuses zu einer Beeinträchtigung der Beweglichkeit innerer Komponenten der Achsbaugruppe 33 führt.

Das längenjustierbare Element 38 kann z.B. eine Gewindestange mit einem Rechts- und einem Linksgewindeabschnitt umfassen, die jeweils in eine komplementäre Mutter auf Seiten des Aufnahmeteils bzw. auf Seiten des Unterzugs 36 eingreifen. Um Fertigungstoleranzen auszugleichen, können die komplementären Muttern mit dem Aufnahmeteil bzw. mit dem Unterzug 36 um eine in Querrichtung orientierte Achse schwenkbar verbunden sein.

Die Unterzüge 36 umfassen jeweils eine Stange 39, die sich unter einem der Längsträger 13 erstreckt und die, von oben gesehen, dem Verlauf des Längsträgers folgt, und eine Platte 40, die entlang ihrer Oberkante am Längsträger 13 und entlang ihrer Unterkante an der Stange 39 befestigt, z.B. verschweißt, ist. Zur Gewichtsminimierung kann die Platte 40 stellenweise durchbrochen sein. Die Stange 39 hat einen vorderen Abschnitt 41, der sich im Wesentlichen in Verlängerung des Stellglieds 31 und parallel zum Längsträger 13 erstreckt, und einen hinteren Abschnitt 42, der zum Längsträger 13 hin schräg ansteigt und an seinem hinteren Ende am Längsträger 13 befestigt ist. Indem insbesondere der vordere Abschnitt 41 über die Platte 40 mit dem Längsträger 13 verbunden ist, wird verhindert, dass die Stange 39 einer vom Stellglied 31 übertragenen Kraft durch eine Verbiegung in der Ebene der Platte 40, d.h. im Wesentlichen in der Vertikalen, ausweicht. Um ein Ausweichen auch in der Querrichtung zu unterbinden, kann neben der Platte 40 noch ein weiterer Stabilisatorkörper zwischen dem Längsträger 13 und der Stange 39 vorgesehen sein, der sich in einer zur Ebene der Platte 40 nicht parallelen Richtung erstreckt, hier z.B. eine Strebe 43, die an Außenseiten des Längsträgers 13 und der Stange 39 befestigt ist. Indem Verbindungspunkte der Platte 40 und der Strebe 43 am Längsträger 13 beabstandet, an der Stange 39 aber eng benachbart wird, wird eine biegesteife Struktur von in der Längsrichtung betrachtet in etwa dreieckigem Querschnitt geschaffen, die ein Ausweichen der Stange 39 in Querrichtung sicher unterbindet.

Zur Versteifung der Unterzüge 36 kann ferner eine Querstange 44 beitragen, die die vorderen Abschnitte 41 der Stangen 39 untereinander verbindet.

### Bezugszeichen

- 1: Feldhäcksler
- 2: Fahrerkabine
- 3: Achse
- 4: Häckseltrommel
- 5: Fördereinrichtung
- 6: Walzenpaar
- 7: Walzenpaar
- 8: Erntevorsatz
- 9: Nachbeschleuniger
- 10: Auswurfkrümmer
- 11: Rahmen
- 12: Häckseltrommelbaugruppe
- 13: Längsträger
- 14: Riemenscheibe
- 15: Gehäuse/Werkzeughalter
- 16: Klemmfassung
- 17: Teil von 16
- 18: Konkavität
- 19: Teil von 16
- 20: Gelenk
- 21: Spannschraube
- 30: Adapter
- 31: Stellglied
- 32: Querbalken
- 33: Achsbaugruppe
- 34: Widerlager
- 35: Schenkel
- 36: Unterzug
- 37: Fußplatte
- 38: längenjustierbares Element
- 39: Stange
- 40: Platte
- 41: vorderer Abschnitt
- 42: hinterer Abschnitt
- 43: Strebe
- 44.: Querstange

## Patentansprüche

1. Landwirtschaftliche Maschine mit einem Fahrgestell, das eine sich in Querrichtung der Maschine erstreckende Achsbaugruppe (33) und wenigstens einen auf der Achsbaugruppe (33) befestigten und sich in Längsrichtung der Maschine erstreckenden Längsträger (13) umfasst, einem an ein Ende des Längsträgers (13) angelenkten Werkzeughalter (15) und einem Stellglied (31) zum Schwenken des Werkzeughalters (15), das sich in der Längsrichtung zwischen einem Angriffspunkt am Werkzeughalter (15) und einem am Fahrgestell festen Widerlager (34) erstreckt, das mit dem Längsträger (13) über die Achsbaugruppe (33) verbunden ist, **dadurch gekennzeichnet, dass** das Widerlager (34) mit dem Längsträger (13) ferner über einen Unterzug (36) verbunden ist, der sich an einer vom Werkzeughalter (15) abgewandten Seite der Achsbaugruppe (33) erstreckt.

2. Landwirtschaftliche Maschine nach Anspruch 1, **dadurch gekennzeichnet, dass** das Widerlager (34) mit dem Unterzug (36) über ein längenjustierbares Element (38) verbunden ist.

3. Landwirtschaftliche Maschine nach Anspruch 1 oder 2, **dadurch gekennzeichnet, dass** der Unterzug (36) eine Stange (39) umfasst, die sich mit zunehmender Entfernung von der Achsbaugruppe (33) dem Längsträger (13) annähert.

4. Landwirtschaftliche Maschine nach Anspruch 3, **dadurch gekennzeichnet, dass** ein dem Widerlager (34) zugewandter Abschnitt (41) der Stange (39) sich in Verlängerung des Stellgliedes (31) erstreckt.

5. Landwirtschaftliche Maschine nach Anspruch 3 oder 4, **dadurch gekennzeichnet, dass** wenigstens ein Stabilisatorkörper (40, 43) sich geradlinig zwischen einem Verankerungspunkt an der Stange (39) und einem Verankerungspunkt an dem Längsträger (13) erstreckt.

6. Landwirtschaftliche Maschine nach Anspruch 3, 4 oder 5, **dadurch gekennzeichnet, dass** wenigstens zwei Stabilisatorkörper (40, 43) vorgesehen sind, deren Verankerungspunkte an dem Längsträger (13) in Querrichtung beabstandet sind.

7. Landwirtschaftliche Maschine nach einem der Ansprüche 3 bis 6, **dadurch gekennzeichnet, dass** ein vom Widerlager (34) abgewandtes Ende der Stange (39) unmittelbar an dem Längsträger (13) befestigt ist.

8. Landwirtschaftliche Maschine nach einem der Ansprüche 3 bis 7, **dadurch gekennzeichnet, dass** eine steife Platte (40) einen Zwischenraum zwischen der Stange (39) und dem Längsträger (13) ausfüllt und jeweils eine am Längsträger (13) und eine an der Stange (39 befestigte Kante aufweist.

9. Landwirtschaftliche Maschine nach einem der vorhergehenden Ansprüche, **dadurch gekennzeichnet, dass** zwei Längsträger (13) an entgegengesetzten Seiten des Rahmens vorgesehen sind, und dass jedem der Längsträger (13) ein Stellglied (31) zum Schwenken des Werkzeughalters (15) zugeordnet ist.

10. Landwirtschaftliche Maschine nach einem der vorhergehenden Ansprüche, **dadurch gekennzeichnet, dass** der Werkzeughalter (15) eingerichtet ist, als Werkzeug einen Erntevorsatz (8) zu tragen.

11. Landwirtschaftliche Maschine nach einem der vorhergehenden Ansprüche, **dadurch gekennzeichnet, dass** sie ein Feldhäcksler ist und der Werkzeughalter (15) durch das Stellglied (31) um eine Drehachse (3) einer Häckseltrommel schwenkbar ist.

## Claims

1. Agricultural machine with a chassis which comprises an axle assembly (33) extending in the transverse direction of the machine and at least one longitudinal member (13) fastened to the axle assembly (33) and extending in the longitudinal direction of the machine, a tool holder (15) hinged to one end of the longitudinal member (13) and an actuator (31) for pivoting the tool holder (15), which extends in the longitudinal direction between a point of contact on the tool holder (15) and a counter bearing (34), fixed to the chassis, which is connected to the longitudinal member (13) via the axle assembly (33), **characterized in that** the counter bearing (34) is furthermore connected to the longitudinal member (13) via a beam (36), which extends on a side of the axle assembly (33) facing away from the tool holder (15).

2. Agricultural machine according to claim 1, **characterized in that** the counter bearing (34) is connected to the beam (36) via a length-adjustable element (38).

3. Agricultural machine according to claim 1 or 2, **characterized in that** the beam (36) comprises a bar (39) which comes closer to the longitudinal member (13) as the distance from the axle assembly (33) increases.

4. Agricultural machine according to claim 3, **characterized in that** a section (41) of the bar (39) facing the counter bearing (34) extends in the elongation of the actuator (31).

5. Agricultural machine according to claim 3 or 4, **characterized in that** at least one stabilizer body (40, 43) extends in a straight line between an anchorage point on the bar (39) and an anchorage point on the longitudinal member (13).

6. Agricultural machine according to claim 3, 4 or 5, **characterized in that** at least two stabilizer bodies (40, 43) are provided, the anchorage points of which on the longitudinal member (13) are spaced apart in the transverse direction.

7. Agricultural machine according to one of claims 3 to 6, **characterized in that** an end of the bar (39) facing away from the counter bearing (34) is fastened directly to the longitudinal member (13).

8. Agricultural machine according to one of claims 3 to 7, **characterized in that** a rigid plate (40) fills an intermediate space between the bar (39) and the longitudinal member (13) and has in each case an edge fastened to the longitudinal member (13) and an edge fastened to the bar (39).

9. Agricultural machine according to one of the preceding claims, **characterized in that** two longitudinal members (13) are provided on opposite sides of the frame, and **in that** each of the longitudinal members (13) is assigned an actuator (31) for pivoting the tool holder (15).

10. Agricultural machine according to one of the preceding claims, **characterized in that** the tool holder (15) is set up to carry a harvesting header (8) as tool.

11. Agricultural machine according to one of the preceding claims, **characterized in that** it is a forage harvester and the tool holder (15) is pivotable about an axis of rotation (3) of a chopping drum by the actuator (31).

## Revendications

1. Machine agricole comprenant un châssis, lequel inclut un ensemble d'essieu (33) s'étendant dans la direction transversale de la machine et au moins un support long (13) fixé sur l'ensemble d'essieu (33) et s'étendant dans la direction longitudinale de la machine, comprenant un support d'outil (15) articulé à une extrémité du support long (13) et un organe de positionnement (31) pour faire pivoter le support d'outil (15), lequel s'étend dans la direction longitudinale entre un point d'attaque sur le support d'outil (15) et un contre-appui (34) fixe sur le châssis qui est relié au support long (13) par l'intermédiaire de l'ensemble d'essieu (33), **caractérisée en ce que** le contre-appui (34) est relié en outre au support long (13) par l'intermédiaire d'une substructure (36) qui s'étend sur un côté de l'ensemble d'essieu (33) situé à l'opposé du support d'outil (15).

2. Machine agricole selon la revendication 1, **caractérisée en ce que** le contre-appui (34) est relié à la substructure (36) par l'intermédiaire d'un élément réglable en longueur (38).

3. Machine agricole selon la revendication 1 ou 2, **caractérisée en ce que** la substructure (36) inclut une barre (39) qui se rapproche du support long (13) à mesure qu'elle s'éloigne de l'ensemble d'essieu (33).

4. Machine agricole selon la revendication 3, **caractérisée en ce qu'**une portion (41) de la barre (39) tournée vers le contre-appui (34) s'étend dans le prolongement de l'organe de positionnement (31).

5. Machine agricole selon la revendication 3 ou 4, **caractérisée en ce qu'**au moins un corps stabilisateur (40, 43) s'étend de manière rectiligne entre le point d'ancrage sur la barre (39) et un point d'ancrage sur le support long (13) .

6. Machine agricole selon la revendication 3, 4 ou 5, **caractérisée en ce qu'**au moins deux corps stabilisateurs (40, 43) sont prévus, dont les points d'ancrage sur le support long (13) sont distants dans la direction transversale.

7. Machine agricole selon une des revendications 3 à 6, **caractérisée en ce qu'**une extrémité de la barre (39) située à l'opposé du contre-appui (34) est fixée directement au support long (13).

8. Machine agricole selon une des revendications 3 à 7, **caractérisée en ce qu'**une plaque rigide (40) comble un intervalle entre la barre (39) et le support long (13) et comporte respectivement une arête fixée au support long (13) et une à la barre (39) .

9. Machine agricole selon une des revendications précédentes, **caractérisée en ce que** deux supports longs (13) sont prévus sur des côtés opposés du bâti, et **en ce qu'**à chacun des supports longs (13) est associé un organe de positionnement (31) pour faire pivoter le support d'outil (15).

10. Machine agricole selon une des revendications précédentes, **caractérisée en ce que** le support d'outil (15) est agencé pour porter comme outil un outil frontal de récolte (8).

11. Machine agricole selon une des revendications précédentes, **caractérisée en ce qu'**elle est une ensileuse et le support d'outil (15) est pivotable par l'intermédiaire de l'organe de positionnement (31) autour d'un axe de rotation (3) d'un tambour hacheur.
